(19) **Europäisches Patentamt / European Patent Office / Office européen des brevets**

(11) **EP 4 786 950 A1**

(12) # EUROPEAN PATENT APPLICATION

(43) Date of publication:
**05.08.2026 Bulletin 2026/32**

(21) Application number: **25155899.5**

(22) Date of filing: **04.02.2025**

(51) International Patent Classification (IPC):
*G01N 3/40* (2006.01)  *G01N 3/30* (2006.01)
*G01N 3/42* (2006.01)  *B33Y 50/00* (2015.01)
*G01M 7/08* (2006.01)  *G01N 29/04* (2006.01)
*G01N 29/42* (2006.01)  *G01N 3/28* (2006.01)

(52) Cooperative Patent Classification (CPC):
**G01N 3/42; B33Y 50/02; B33Y 80/00; G01M 7/08;
G01N 3/30; G01N 3/405; G01N 29/045;
G01N 29/46;** B22F 10/28; B29C 64/153; G01N 3/28;
G01N 2203/001; G01N 2203/0067;
G01N 2203/0075; G01N 2203/0078;    (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicants:
• **GrindoSonic BV**
  **3001 Leuven (BE)**
• **Imprintec GmbH**
  **44801 Bochum (DE)**

(72) Inventors:
• **VAN DEN BOSSCHE, Alex**
  **3040 Neerijse (BE)**
• **LINDNER, Karl-Heinz**
  **45481 Mülheim (DE)**
• **SCHMALING, Benjamin**
  **40591 Düsseldorf (DE)**
• **KALLIATH, Adithya**
  **44801 Bochum (DE)**

(74) Representative: **Oryon NV**
  **Tavernierkaai 2**
  **2000 Antwerpen (BE)**

(54) **NON-DESTRUCTIVE STRESS-STRAIN MEASUREMENT METHOD AND SYSTEM**

(57)    The present concerns a method for obtaining stress-strain material parameters of a solid piece, comprising the steps of: (I) optically and/or tactilely obtaining a generated indentation topography of a local indent generated into the solid piece and extracting indent material parameter values of a first set of stress-strain material parameters of the solid piece from the generated indentation topography, (II) obtaining a vibrational response to an elastic impact on the solid piece, and (III) extracting a validity restriction to at least one of the first set of stress-strain material parameters of the solid piece from the vibrational response.

Fig. 10

EP 4 786 950 A1

(52) Cooperative Patent Classification (CPC): (Cont.)
G01N 2203/0212; G01N 2203/0264;
G01N 2203/0647; G01N 2203/0682;
G01N 2203/0688; G01N 2291/02827

**Description**

**Technical field**

The present invention concerns a non-destructive stress-strain measurement method and system and relates to the technical field of obtaining stress-strain parameters of solid pieces. More in particular, the present invention pertains to a measurement method and system for obtaining the most important material parameters required to reconstitute a stress-strain curve in a non-destructive manner.

**Background**

In engineering and materials science, a stress-strain curve for a material gives the relationship between stress and strain. It is traditionally obtained by gradually applying load to a test coupon and measuring the deformation, from which the stress and strain can be determined. These curves reveal many of the properties of a material, such as the Young's modulus, the yield strength and the ultimate tensile strength. The stress-strain curve is traditionally obtained in a tensile test, in which a sample is subjected to a controlled tension until failure. It is clear to see that the traditional method for obtaining the stress-strain curve is destructive in nature: during the tensile test, the sample eventually breaks. The present invention intends to provide a method and system whereby the material parameters, traditionally obtained in a destructive tensile strength, are obtained in essentially a non-destructive manner.

International application WO 2019/076923 A1 discloses a measuring device for determining at least one mechanical property of a workpiece sample, which comprises at least one image capturing unit for optically determining a workpiece geometry of the workpiece sample, and at least one mechanical inspection head for making an indentation in the workpiece sample. According to the invention, at least the image capturing unit and the mechanical inspection head form a structural unit together. The prior art document discloses in detail how to obtain mechanical properties of a workpiece samples without breaking it.

An important shortcoming of an indentation test, is that such test inherently only gives local information. Indeed, an essentially non-destructive test requires any indentation to be small and localised. As such, the mechanical parameter values of the workpiece which are derived from inspection of the local indentation are only assured at or near the position of the indentation. Moreover, certain material parameters simply cannot be measured using a local test, such as the fracture strain of a solid piece, or are difficult to measure accurately using a local test. As such, a non-destructive indentation technique for obtaining mechanical properties of a solid piece, as described e.g. in WO 2019/076923 A1, does provide a boundary to the validity of the measured stress-strain material parameters of the solid piece. Indeed, a local indentation techniques allows obtaining mechanical material parameters in the plastic deformation region of the stress-strain curve, but does not, by itself, allow to decide until which stress or strain a solid piece will break.

The "elongation at break", also called "fracture strain" or "tensile elongation at break", is an important material parameter which can be measured with standardized tests. Elongation at break is a measure of a material's ductility and toughness. It quantifies the amount of deformation a material can withstand before breaking. Elongation is a metric that is regularly employed in the testing and assessment of materials for engineering and manufacturing applications. Standardized test methods exist for obtaining the elongation at break, e.g. ASTM E8 and ASTM A370. These tests are destructive. Indeed, elongation at break is commonly measured by pulling on a test piece in a longitudinal direction until it breaks, thereby measuring the percentage elongation.

Three main problems arise for such standardized tests:

- They are, by their very nature, destructive, meaning that one cannot obtain the elongation at break of an object that will actually be used in later applications because the object needs to be broken. Hence, one can only make statistical or probability statements on the elongation by referring to tests performed on other, similar objects. Whereas this may give sufficiently accurate results for certain materials, it may not be accurately enough for e.g. 3D printed objects since, for such objects, the 3D printing process tends to lead to objects having a large spread in material properties.
- They are time consuming, and may require intensive preparation of the samples to be tested.
- They are typically standardized only for solid pieces having a pre-specified geometry and/or size.

Tensile tests typically produce stress-strain diagrams used to determine tensile modulus, tensile strength (at yield and at break), tensile modulus, tensile strain, elongation, and percent elongation at yield, elongation at break and elongation at break in percent. It should be noted that generally elongation at break is expressed in percent, whereby the additional elongation is compared to the original length of the test piece, i.e. the length of the test piece when no stress is applied, e.g. using the formula $A=(L_b-L_0)/L_0 \times 100\%$, wherein A is the elongation at break in percent, $L_b$ is the length at break, and $L_0$ is the original length of the test piece.

Additive manufacturing (AM), also called three-dimensional or 3D printing, is a process which has gained a lot of momentum in recent years. It allows construction of a three-dimensional object from a CAD model or a digital 3D model. Hereby, material can be deposited, joined or solidified under control conditions to create a three-dimensional object, with material being added together, such as liquid molecules or powder grains being fused together, typically layer by layer. The precision, repeatability, and material range of 3D printing have increased to the point that some 3D printing processes are considered viable as an industrial-production technology. One of the key advantages of 3D printing is the ability to produce very complex shapes or geometries that would be otherwise impossible to construct by hand, including hollow parts or parts with internal truss structures to reduce weight. In many cases it is necessary to ensure that 3D printed pieces meet required quality standards and that anomalies can be detected and characterized. It is thus important to have metrology tools for mechanical property evaluation and for appropriate anomaly detection, quality control, and monitoring. Knowledge of when various types of deviations of quantities from the expected values appear, will increase the potential for early detection of significant flaws in additively manufactured parts and offers the potential opportunity for in-process intervention and to hence decrease the time and cost of repair or rework. Because the AM process involves incremental deposition of material, it gives unique opportunities to monitor the material quality as it is deposited. To meet this need there are a variety of sensing methods and signals which can be measured. Among the available measurement modalities, acoustic-based methods have the advantage of potentially providing real-time, continuous in-service monitoring of manufacturing processes at relatively low cost.

The present invention aims to provide a method and system which essentially allows obtaining a full stress-strain curve of a solid piece in an essentially non-destructive manner, thus i.a. allowing selection of solid pieces on the basis of their actual measured stress-strain parameters rather than on the basis of statistical considerations. Furthermore, the present invention aims to provide a method and system for obtaining the stress-strain parameters for a large variety of geometries and sizes of solid pieces, without the need for intricate solid piece sample preparations.

## Summary of the invention

The present invention concerns a method and system for obtaining stress-strain material parameters of a solid piece as described in claims 1 and 10. Preferred embodiments are described in the dependent claims and in the following.

A main advantage of the current invention, is that the region of validity of stress-strain material parameters as obtained using an indentation technique can be restricted on the basis of a non-destructive impact excitation technique, thereby effectively allowing reconstruction of the stress-strain curve or an equivalence thereof for a specific solid piece without destroying the solid piece. The importance of the contribution to the art of such method, and a system configured to perform such method, cannot be easily overstated.

Another main advantage of the current invention, is that the method, and system, can be applied to essentially all types of solid pieces. More in particular, whereas stress-strain parameters are traditionally obtained for solid pieces of predefined or standardized shapes and sizes, the present invention allows obtaining the most important stress-strain parameters for essentially all shapes and for a wide range of sizes. Furthermore, the present invention allows obtaining the stress-strain parameters without destroying or seriously deforming the solid piece. Indeed, the only deformation needed is a local indent, which can be kept small, typically less than 0.5mm. As such, the present invention can be deemed to refer to a non-destructive method for obtaining the stress-strain parameters.

## Overview of the figures

Fig. 1 shows the stress strain curves of four beam-shaped test solid pieces.

Fig. 2 shows the Poisson's ratio's of the four test solid pieces.

Fig. 3 shows the damping parameters of the four test solid pieces.

Fig. 4 shows an example of a reference correlation prescription for solid pieces having the shape and size of the test solid pieces, the correlation prescription being presented between the Poisson ratio's of fig. 2 and the damping parameters of fig. 3 on the one hand, and a fracture strain value on the other hand. "QF" refers to the product of the Poisson ratio and the damping parameter, multiplied by 1000 for ease of readability, and "A" refers to fracture strain in percent.

Fig. 5 illustrates a typical stress-strain curve, with identification of common parameters.

Figs. 6-10 illustrate how the results of a vibrational response measurement can be used to restrict the validity of indentation measurements for a batch of 25 metal solid pieces.

**Detailed description of the invention**

The present invention concerns a method for obtaining stress-strain material parameters of a solid piece, comprising the steps of:

(I) optically and/or tactilely obtaining a generated indentation topography of a local indent generated into the solid piece and extracting indent material parameter values of a first set of stress-strain material parameters of the solid piece from the generated indentation topography,

(II) obtaining a vibrational response to an elastic impact on the solid piece, and

(III) extracting a validity restriction to at least one of the first set of stress-strain material parameters of the solid piece from the vibrational response.

Step (I) herein refers to an indentation technique for obtaining stress-strain material parameters for a solid piece. Indentation methods and systems for executing such methods are known. Preferred methods and systems are described in WO 2019/076923 A1 and DE102011115519A1, which are hereby incorporated by reference.

Step (II) refers to an impact excitation (IE) technique which basically involves providing an elastic impact on the solid piece and obtaining the vibrational response thereto, whereby the vibrational response can be analyzed to obtain mechanical parameters and properties of the solid piece. IE techniques and systems for executing such methods are known. Preferred methods and systems are described in e.g. WO 2019/020825 A1, WO 2020/254698 A1, WO 2022/148827 A1, WO 2022/189466 A1, WO 2023/072925 A1, WO 2023/083944 A1, WO 2023/152399 A1, and/or WO 2024/008679 A1.

Step (III) combines the two techniques, in that the validity restriction for the stress-strain parameters obtained in step (I) by the indentation technique, is extracted from the vibrational response. This is surprising, in that the two techniques are clearly different: the indentation technique concerns a local plastic deformation of the material, whereas the IE technique is essentially an elastic measurement on the solid piece. The inventors have surprisingly found that the vibrational response obtained in the elastic IE technique contains information concerning global stress-strain parameters, such as fracture strain, ductility at fracture, Young's modulus, Poisson's ratio, etc., at least one of which can be used to restrict the validity of the stress-strain parameters, which preferably comprise plastic deformation stress-strain parameters, as obtained in the indentation technique.

Indentation technique

According to the invention, the indentation measuring device for (in particular non-destructive and / or low-destructive) determination of indent material parameter values of a first set of at least one stress-strain material parameter of the solid piece, which is optionally fixable in a workpiece holder of the indentation measuring device for testing, comprises at least one image acquisition unit for optically determining a solid piece geometry of the solid piece. Moreover, in the case of the indentation measuring device according to the invention, at least one mechanical test probe is provided for producing a, preferably mechanical, impression in the solid piece. Preferably, at least the image acquisition unit and the mechanical test probe together form a structural unit.

The terms "impression", "indent", or "indentation" are understood to mean a generated depression, preferably in the surface of the solid piece, which is generated by a, preferably mechanical, probe in the solid piece. The solid piece may comprise material which has anisotropic properties and may then be referred to below as "anisotropic material" and / or "anisotropic solid piece".

The structural combination of the image acquisition unit and the mechanical test probe into a structural unit affords the advantage that a fully automatic measurement can be realized on the solid piece, preferably without a movement of the solid piece itself and/or indentation measuring device. In particular, this automatic measurement does not require any manual intervention by the operating personnel during the execution of the corresponding indentation measuring and testing method. Preferably, for performing the indentation method, this indentation measuring device (advantageously once) is brought to the solid piece, so that not the solid piece is moved to the indentation measuring device, but vice versa, i.e. the indentation measuring device is moved to the solid piece.

The stress-strain material parameters of the solid piece can be any or any combination of the following: hardening behavior, damage parameters, tensile and/or compressive strength, ductility, deformability, toughness, flow initiation, parameters which describe the creep behavior, parameters which describe the material fatigue, yield strength and/or solidifications of the materials. Also other material properties of a solid piece can be determined, such as rolling or stretching direction. Likewise, anisotropic materials can also be investigated and their material properties be determined.

Preferably, a workpiece holder for fixing and testing of the solid piece is provided, which can be mechanically connected or fixed in particular via a test frame of the assembly of image acquisition unit and test probe. Since the mechanical test probe exerts a test force on the solid piece, it is advantageous that the solid piece is fixed relentlessly, in particular in the workpiece holder. If the solid piece is flexibly fixed in the workpiece holder, the necessary correction effort in the method increases in order to obtain accurate measurement results.

The indentation measuring device in accordance with the present invention leads to a determination of local material properties. In contrast to conventional tensile and hardness tests, a mechanical impression, is made in the solid piece during the measurement whereby local material properties/parameters are determined, preferably by comparing an impression topography measured (in particular exclusively optically) with a computer-based simulation of a theoretical impression topography, preferably using a material model, an optimization algorithm and/or a method of artificial intelligence, machine learning, etc.

For this purpose, the solid piece can be fixed in the workpiece holder, preferably via a chuck, in particular a quick-action chuck, or a fixing unit of the indentation measuring device and this can be optically detected by an image acquisition unit in such a way that the solid piece geometry of the solid piece can be determined by the image acquisition unit. The solid piece can also be picked up without clamping the solid piece, depending on the shape of the piece, e.g. in the case of plane-parallel pieces, and where the impression is to be made. The workpiece holder comprises an unyielding base for the solid piece to counteract the test force of the test probe. According to the invention, it is conceivable here that the image acquisition unit optically acquires the solid piece one-dimensionally in conjunction with a grid, two-dimensionally and/or three-dimensionally.

The at least one test probe of the measuring device can (after optical detection) make a mechanical indentation on the solid piece by means of an indentation method with a test force. Ideally, after each mechanical indentation made, an optical and/or tactile detecting of the respective indentation topography can take place in order to improve the accuracy of the entire method.

The test probe, the workpiece holder and/or the image acquisition unit can be constructed so as to be movable relative to one another, whereby according to the invention at least one drive unit is provided for at least partial positioning of the workpiece holder, the image acquisition unit and/or the probe relative to one another. This means that the solid piece does not have to be reclamped or reattached during step (I). The drive unit can be driven mechanically, electrically, electromechanically, hydraulically and/or pneumatically. The drive unit can also be configured "passively" as a dead weight and/or spring drive and/or force/energy accumulator, so that no active drive is required for the relative movement of the probe to the workpiece probe. It is also conceivable that only one of the three components: workpiece holder, image acquisition unit and test probe or all components are configured to move relative to each other. Preferably, the test probe of the unit in accordance with the invention is configured so that it can move relative to the image acquisition unit. It is also conceivable that more than one drive unit is provided. In this case, at least one drive unit can be provided for the adjustment or movement of the test probe unit and/or the image acquisition unit. A drive unit can also position at least one component, workpiece holder, image acquisition unit and/or test probe, or one drive unit can drive more than one component or all components, the workpiece receptacle, image acquisition unit and/or the test probe and thus at least partially position them. Preferably the at least one drive unit serves at least for partial positioning of the workpiece holder with a solid piece fixed therein and the at least one test probe relative to one another, so that an indentation, in particular a mechanical indentation, can be generated in the solid piece. This method can also be described as hardness testing or impression method, in particular nanoindentation method. Within the scope of the invention, the solid piece may in particular exhibit an isotropic and/or anisotropic material, in particular sintered materials and/or hardened materials.

Furthermore, the indentation measuring device according to the invention enables an essentially non-destructive material testing, whereby the intervention of an operator for the determination of mechanical properties of the workpiece probe can at least be reduced or even completely avoided, while at the same time the speed for the execution of the method or the testing can be increased many times over by automation. In this way, the results obtained on the stress-strain parameters of the solid piece can be significantly improved, since personal operating errors can be at least partially or even completely avoided. The reproducibility of the measuring method can also be significantly improved. The optical determination of the solid piece geometry, the mechanical indentation in the solid piece as well as the optical detecting of the mechanical indentation can be made possible (automatically) by at least partial or complete positioning of the components to each other. Thus, an automatic testing of one or more solid pieces can be performed by the device according to the invention, preferably fully automatically. This allows the indentation measuring method to be performed particularly quickly and accurately, especially in an inline production and/or processing method of the solid piece, so that the reproducibility of the measuring results is excellent.

It is also conceivable that the test probe has a probe tip, whereby the probe tip has at least one mineral or hard metal. Other materials for the probe tip are also conceivable, depending on the solid piece. The probe tip itself can be interchangeable, preferably via a chuck, especially a quick-action chuck. In particular, the probe tip can have a defined probe tip geometry. According to the invention, a mineral can be a diamond or a ruby. A hard metal can be in the form of a sintered carbide tungsten carbide, which enables high hardness and wear resistance to be achieved. Preferably, the carbide can at least contain tungsten carbide and/or cobalt. In addition, it is conceivable that the probe tip may have titanium carbides, tantalum carbides, chromium carbides and/or vanadium carbides, especially in a metallic material. The high hardness and wear resistance that can be achieved in this way can thus enable comparable, and in particular constant, mechanical impressions in the solid piece over a long period of time. Furthermore, the wear of such hard metals and minerals is low. The probe tip geometry can be spherical, conical, sphero-conical or spherical. Preferably, the probe tip is configured geometrically in such a way that a material expansion in the area of the mechanical impression in the solid piece can be achieved. It is particularly preferred if the probe tip geometry is rotationally symmetrical, so that an optical detection of the mechanical impression in an isotropic the solid piece (with isotropic material) has a rotationally symmetrical course. Accordingly, averaging along the mechanical impression can be performed, for example, in degree angle steps, preferably every 1° to 5°. In the case of an anisotropic the solid piece, there is usually no rotationally symmetrical course, but rather a cloverleaf-shaped course, for example.

Advantageously, a depth gauge (as well as a force gauge, if necessary) can be provided for the probe, among other things, whereby at least one impression depth (also called penetration depth) of the probe, in particular the probe tip, can be measured in the solid piece. The indentation measuring method is preferably performed with predefined test conditions, e.g. predefined force and/or impression depth. Due to the known probe tip geometry and the measured data for penetration force and penetration path, the contact area and subsequently the previously mentioned material parameters/properties can be averaged. A depth gauge in accordance with the invention can be a plate capacitor, in particular a propellant plate capacitor, which is mounted on an atomic force microscope, for example, and when a force is applied to make a mechanical impression in the workpiece probe, a change in capacitance in the plate capacitor can be measured. On the one hand, this allows the necessary force and the corresponding penetration depth to be measured, whereby the solid piece parameters/properties can also be concluded.

According to the invention, the depth of indentation or penetration of the probe, in particular of the probe tip, can be between approximately 1 $\mu$m and approximately 3,000 $\mu$m, preferably between approximately 10 $\mu$m and approximately 500 $\mu$m, particularly preferably between approximately 50 $\mu$m and approximately 250 $\mu$m. The low impression depth allows an essentially non-destructive material testing of the solid piece and at the same time metals, alloys and certain plastics can be measured by the measuring devices. Accordingly, the solid pieces or components remain almost unharmed during the indentation measuring method, as invented, compared to e.g. known tensile tests, which usually destroy the sample.

A light source may be provided within the scope of the invention, in particular the light source may be integrated in the imaging unit. According to the invention, the light source serves for (optimal) illumination of the solid pieces or the mechanical impression in the solid piece. Thus, the light source in the image acquisition unit can be configured as part of the optical sensor and thus also belong to the indentation measuring method (e.g. like interferometer). The light source can illuminate the surface geometry of the solid piece and the indentation geometry of the mechanical indentation in such a way that the solid piece geometry and the indentation geometry can be optically detected via the image acquisition unit. According to the invention, the light source can be regulated in such a way that the light intensity can be adapted to the existing light conditions, for example, so that reflections can be essentially prevented. The light source can, for example, be an optical sensor with at least one (integrated) infrared, LED and/or OLED light source. Preferably, the light source generates at least one light spot or linear light strip that can be controlled (light spot or light strip). Thus, the light can be sent to the defined points of the mechanical impression of the workpiece probe, whereby an optical measurement can be significantly improved. It is also conceivable that the existing light source illuminates the entire workpiece probe over a large area and in particular homogeneously.

The image acquisition unit can be configured as a confocal microscope or a chromatic white light sensor (a white light interferometer is preferred). A stereo lens is also conceivable in order to be able to detect the three-dimensional shape of the mechanical impression of the solid piece with particular optical precision. Additionally or optionally, various sensors (e.g. for laser triangulation, laser scanning, or for confocal microscope, profilometer, atomic force microscope, or as confocal sensor, focus variation sensor), especially based on focus variation, as well as white light sensors (point sensor) for measurement data acquisition (with or without additional light source) can be provided. The measured data of the mechanical indentation of the solid piece are stored as a digital (generated) impression topography in a control unit and/or an electronic unit in a memory, e.g. as 3D geometry, or point cloud, or xyz triple, or data matrix, in order to be able to compare these, if necessary, subsequently with the computer-based simulation of a theoretical impression topography using a material model.

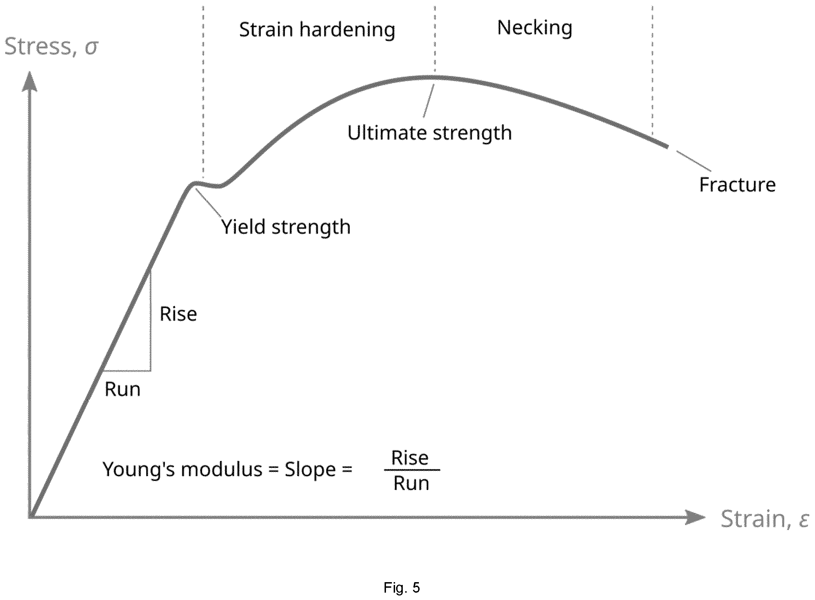

The first set of stress-strain parameters preferably comprise any or any combination of: yield strength, ultimate strength, hardening behaviour. These parameters and their relation to stress strain curves are illustrated in fig. 5.

Furthermore, it is conceivable within the scope of the invention that the indentation measuring device can be arranged and/or moved on a support arm, in particular a robot arm. Thus, the indentation measuring device can-as already mentioned before-be brought to the solid piece in order to perform the indentation measuring method there. This allows performing the indentation measuring method on a solid piece fixed in a workpiece holder which does not form part of the indentation measurement device. For instance, a workpiece holder of the IE device of the system of the present invention.

According to the invention, it is possible that at least one control unit is provided for controlling and/or regulating and/or evaluating data of the image acquisition unit and, optionally, the drive unit, preferably that the indentation measuring device has at least one interface for transmitting data of the image acquisition unit and the drive unit to a spaced-apart electronic unit. The control unit in accordance with the invention serves for the control and/or regulation and/or evaluation of data of the indentation measuring device, wherein parameters for determining the material properties or material parameters can be set in particular via the control unit. Accordingly, at least the penetration depth, the penetration force and/or the number of mechanical impressions to be made on the solid piece can be controlled and/or regulated via the control unit. In addition, data of the measurement, e.g. of the image acquisition unit, the drive unit, in particular the probe, the probe tip and/or the depth gauge and/or force gauge can be obtained via the control unit. For this purpose, the control unit can be equipped with a memory for data storage. The control unit can also have at least one computing unit (microprocessor) in order to be able to calculate the computer-based simulation of a theoretical impression topography using a material model and, if necessary, compare it with the generated impression topography (from the memory) or obtain it from a database or map it using a neural network.

The indentation measuring device is intended to, and thus preferably configured to, perform step (I) of the method according to the invention. Step (I) basically describes an indentation measuring method for determining stress-strain parameters of a solid piece. The method preferably comprises at least one or all of the following steps:

a) obtaining an initial topography of the solid piece at an indent location
b) generating an indent into the solid piece at the indent location
c) subsequently obtaining the generated indentation topography of the generated indent
d) simulating a theoretical indentation topography using a material model of the solid piece, preferably said material model being an elastoplastic model and/or preferably an anisotropic material model, the material model comprising a set of material model parameters
e) obtaining model parameter values for said model parameters by comparing the theoretical indentation topography to the generated indentation topography, optionally by fitting the model parameters to reduce a difference between the theoretical indentation topography and the generated indentation topography
f) obtaining said indent material parameter values of the first set of stress-strain material parameters from the obtained material model parameter values.

Preferably, the method comprises any or any combination of the following steps:

• Optical and/or tactile detection of a solid piece geometry of the solid piece prior to generating the indentation,
• Generation of a, preferably mechanical, impression by penetration of a test probe, in particular a probe tip, into the solid piece with predefined test conditions,
• Computer-based simulation of a theoretical impression topography (of the impression) using a material model, in particular an elastoplastic model, preferably for anisotropic materials,

Preferably these steps are performed automatically, thus avoiding personal operating errors.

Preferably, some, including all, of the method steps can be performed simultaneously or consecutively. Preferably steps d) and e) are repeated and/or iterative until hardly any differences can be detected when comparing in step e). Subsequently, step f) can be performed, which thus determines particularly exact data for the stress-strain parameters of the solid piece. Step f) can also take place after step e) each time.

Thus, steps d), e) and f) can, in an embodiment, form a common comparison step in an iterative method.

Preferably:

1. simulations are performed repeatedly (or the simulated geometry is taken from a database) and compared with the real geometry, whereby an error square can be obtained
2. this error square is reduced by increasingly "fitting" simulations
3. If the error square is very small, the fitting iterations can be stopped.

The result from step f) is then output.

The simulated theoretical indentation topography can be performed using one or more theoretical material models, an elastoplastic model, preferably for anisotropic materials, it being possible to determine the material model in particular on the basis of the defined test condition data and using an algorithm and/or a heuristic. The material model can be elastoplastic, elastoviscoplastic or plastic. In step e), the simulated, preferably computer-based and thus theoretical indentation topography and the mechanically generated impression topography, which is determined by an image acquisition unit, in particular by optical and/or tactile acquisition, are compared. Consequently, a determination of the mechanical properties of the solid piece can be performed in step f). During the optical and/or tactile detecting of an impression topography of the generated impression in the workpiece probe, a 3D elevation image of the mechanically generated impression in the solid piece is preferably determined. In the computer-based simulation of a theoretical impression topography, a 3D elevation image of the theoretical impression can also be simulated. The two 3D elevation images are then compared with each other, whereby the mechanical properties, in particular hardening behavior, damage parameters, tensile strength, ductility, deformability, toughness, start of flow, strain limits, parameters describing creep behavior, parameters describing material fatigue, or similar parameters can be determined. When generating the mechanical impression and thus generating an impression topography in the solid piece, an impression is preferably generated in the workpiece probe using predefined test conditions/parameters such as a test force and/or test depth.

Ideally, at least one FEM (Finite Element Simulation) of a theoretical impression topography using the material model is performed in step d). By using the FEM simulation, the mechanical properties of the solid piece can be determined particularly accurately using the simulation. In addition, mathematical methods optimized for FEM simulation have been developed in order to run the computer-based simulation in the shortest possible time steps.

It is preferably intended that the detected material geometry of the solid piece from step a) is taken into account in the actual detecting of the impression topography of the generated impression in the solid piece. This additional step can increase the accuracy of the present measuring method, as different surface configurations can be present over the length and width of continuous solid pieces. In particular, curvatures or deflections of the solid piece can be taken into account in order to determine the measurement result or the mechanical properties to be determined exactly.

Furthermore, it is conceivable that in step c) an acquisition of a complete impression topography of the generated impression in the solid piece is performed. This means that not only parts of the impression topography are measured optically and/or tactilely, but the entire impression topography. This is of particular importance in the case of anisotropic materials.

It is also conceivable within the scope of the invention that for each step d) a step c) is performed and subsequently a step e) and/or step d) can be performed. In this case, impression topographies at one and the same location, which have been performed with different test forces or penetration depths, can also be examined in order to improve the measuring accuracy of the method.

In order to accelerate the method, the impression topography detected optically and/or tactilely in step c) can be compared with pre-stored impression topographies from a database, whereby the pre-stored impression topography with the least differences in comparison with step e) can be used to determine the stress-strain parameters of the solid piece. Thus, it may be intended that data from pre-simulated impression topographies are used in step e). Preferably, these data can be stored in a memory and/or database, which are provided in particular in the spaced electronic unit.

Furthermore, it is conceivable that artificial intelligence methods are used at least for step d) and/or e). On the one hand, this can save time in the method according to the invention and on the other hand, it can also increase the accuracy of the method. However, the use of the artificial intelligence method can significantly increase the effort required in advance for the training of the corresponding control unit. Furthermore, it is conceivable that learning methods, preferably deep learning and/or neural network methods, may be used. Advantageously, these learning methods have been developed to such an extent that they can also be used for difficult and complex application methods, such as those currently available in this method.

It is also possible that in a further step correction between the captured impression topography and the simulated impression topography takes place in order to eliminate measurement errors based, for example, on incorrect assumptions in the material model. In addition, the accuracy of the present measuring method can be improved.

The test load for generating the indentation can advantageously be between approximately 10 g and approximately 3,000 kg, preferably between approximately 1,000 g and approximately 1,000 kg, particularly preferably between approximately 10 kg and approximately 500 kg. Furthermore, the depth of the impression can be between about 1 $\mu$m and about 3,000 $\mu$m (or only 1,000 $\mu$m), preferably between about 10 $\mu$m and about 500 $\mu$m, particularly preferably between about 50 $\mu$m and about 250 $\mu$m.

Impact excitation (IE) technique and validity restrictions:

The inventors have found that for solid pieces, a clear correlation exists between the fracture strain on the one hand and a Poisson effect parameter and a longitudinal eigenfrequency damping parameter on the other hand. Consequently, measuring such Poisson effect parameter and longitudinal eigenfrequency damping parameter allows obtaining the fracture strain, which poses a validity restriction on stress-strain parameters obtained from an indentation technique. Hereby,

- the fracture strain refers to the fracture strain along a longitudinal axis of the solid piece,
- the Poisson effect parameter refers to a parameter representing the deformation of a material in a direction perpendicular to a load direction. A preferred Poisson effect parameter is the Poisson ratio with respect to said longitudinal axis and a transversal axis of the solid piece which is perpendicular to the longitudinal axis, and

- the longitudinal eigenfrequency damping parameter refers to the parameter describing the attenuation of a longitudinal eigenfrequency of the solid piece, preferably the first order longitudinal eigenfrequency. A damping parameter, also referred to as a damping coefficient, can be computed from the attenuation. Typically, attenuation can be quantified by looking at the eigenfrequency peak in the frequency spectrum of the vibrational response. Preferably, a damping parameter is related to a width of the eigenfrequency peak in the vibrational response, e.g. the width of the eigenfrequency peak at half maximum.

More in particular the fracture strain, also called the elongation at breakage, appears to be approximately proportionate to the product of the Poisson ratio and the damping parameter. In order to allow a certain degree of freedom to more accurately model the correlation, the elongation at breakage A can be derived from the following formula:

$$A = C.P_v^r.D^s \qquad \text{(form. 1)}$$

Herein, 'A' refers to the elongation at breakage, preferably expressed in percentage of the original length of the solid piece, i.e. the length of the solid piece when it is not put under stress, '$P_v$' is the Poisson ratio which is exponentiated by 'r', and 'D' is the damping parameter which is exponentiated by 's'. 'C' is a constant which typically depends on the dimensions and shape of the solid piece.

Step (III) preferably comprises the steps of:

- obtaining from the vibrational response a Poisson effect parameter, preferably a Poisson ratio, of the solid piece with respect to a longitudinal axis associated with the solid piece and a transversal axis associated with the solid piece, the transversal axis perpendicular to the longitudinal axis;
- obtaining a damping parameter for an eigenfrequency along said longitudinal axis from the vibrational response;
- providing a reference correlation prescription for said solid piece between the Poisson effect parameter and the damping parameter on the one hand, and a fracture strain value on the other hand, and
- deriving the fracture strain of the solid piece from said reference correlation prescription.

Hereby, the fracture strain restricts the validity of the at least one of the first set of stress-strain material parameters of the solid piece. Additionally, or alternatively, the ductility at fracture can be derived from a reference correlation prescription which is provided for the solid piece between the Poisson effect parameter and the damping parameter on the one hand, and ductility at fracture value on the other hand.

Without wishing to be bound by theory, the inventors believe that the tensile strength of a solid piece is determined by a combined phenomenon of increased microcrack propagation due to higher area reduction. The Poisson effect parameter basically describes the area reduction versus elongation in the elastic domain, whereas the damping provides a quantitative indication of the dissipative microcrack concentration and thus brittleness of and early failure by crack propagation of a solid piece during load. A part with a higher Poisson effect parameter in combination with a higher internal friction due to a high microcrack concentration, will take off with a higher area reduction already in the elastic domain and go faster to breakage due to increased microcrack propagation caused by the higher internal friction due to higher microcrack concentration in the material. Hence, area reduction and microcrack concentration reinforce one another, thereby having a major impact on the tensile strength and in particular on the elongation at breakage. It is suspected that this phenomenon has not been identified before as it may occur only if both area reduction and microcrack concentration occur at a high enough scale. This seems to be particularly relevant for 3D printed solid pieces, whereby the 3D printing process may induce small yet significant variations between the objects with respect to porosity and microcrack concentration. The inventors have realized that porosity hereby has a direct effect on the Poisson effect parameter, and in particular on the Poisson ratio, and microcrack concentration has a direct effect on the attenuation of vibrations, as quantized by the damping coefficients of eigenfrequencies.

**The Poisson** effect parameter and the damping ratio can be obtained using one or more non-destructive measurement methods. A preferred non-destructive measurement method is an impact excitation measurement method. Hence, in a preferred embodiment, the Poisson effect parameter, the damping parameter or both, are obtained using an impact excitation measurement. Hereby an impact is provided to the solid piece, leading to a vibrational response. This vibrational response is captured, preferably acoustically, e.g. by a microphone. From the captured vibrational response, a set of eigenfrequencies of the solid piece can be obtained, as well as a set of damping parameters for each of the eigenfrequencies. The value of the eigenfrequencies can be used to obtain a value of the Poisson effect parameter. As such, both the Poisson effect parameter and the damping parameter used to derive the fracture strain, can be obtained non-destructively.

Hence, in an embodiment, the method of the present invention comprises the steps of:

- providing an elastic impact, preferably a mechanical impact, to the solid piece;
- obtaining a vibrational response of the solid piece to the impact in the frequency domain;
- extracting a set of eigenfrequencies, and a set of attenuations, from the vibrational response, each of said eigenfrequencies corresponding to a vibrational mode of said solid piece, and each of said attenuations corresponding to an eigenfrequency of said set of eigenfrequencies, whereby the set of eigenfrequencies comprises at least one eigenfrequency corresponding to a longitudinal mode of the solid piece and at least one eigenfrequency corresponding to a transversal mode of the solid piece;
- obtaining the Poisson effect parameter, preferably the Poisson ratio, on the basis of the obtained set of eigenfrequencies, and
- obtaining the damping parameter on the basis of the obtained set of attenuations

Hereby the Poisson effect parameter and the damping parameter can be used to derive the fracture strain of the solid piece as disclosed above and further in this document.

For beam-shaped solid pieces, the set of frequencies can be used directly to obtain the Poisson effect parameter. For instance, the eigenfrequency $f_f$ of a longitudinal vibration mode is indicative of the sample's dynamic Young's modulus E. For a beam with mass m, length L, width b, and thickness t, one may use the following relation:

$$E = 0.9465 \left(\frac{mf_f^2}{b}\right)\left(\frac{L^3}{t^3}\right) T$$

with the correction factor T defined as

$$T = 1 + 6.585 \left(\frac{t}{L}\right)^2 \quad \text{if} \quad L/t \geq 20.$$

The eigenfrequency $f_t$ of a torsion vibration mode is indicative of the sample's shear modulus. Note that the torsion vibration mode is essentially perpendicular to the longitudinal vibration modes, and is thus considered a transversal mode. For the beam with mass m, length L, width b, and thickness t, one may use the following relation:

$$G = \frac{4Lmf_t^2}{bt} R$$

with the correction factor R defined as

$$R = \left[\frac{1+\left(\frac{b}{t}\right)^2}{4-2.521\frac{t}{b}\left(1-\frac{1.991}{e^{\pi\frac{b}{t}}+1}\right)}\right]\left[1 + \frac{0.00851b^2}{L^2}\right] - 0.060 \left(\frac{b}{L}\right)^{\frac{3}{2}}\left(\frac{b}{t} - 1\right)^2.$$

These known ways to determine E and G rely only on the peak frequencies in the spectrum of the sample's response. The Poisson ratio can be obtained from Young's modulus E and the shear modulus G according to:

$$\nu = \frac{E}{2G} - 1$$

Note that the Poisson effect parameter may be the Poisson ratio as defined above, but may also be another parameter, such as E/G or G/E or any other parameter which is representative of the deformation of a material in a direction perpendicular a load direction.

Given that the fracture strain can be derived from the Poisson effect parameter and the damping parameter, both of which can be obtained from the vibrational response to an impact provided to a solid piece. The present invention thus also relates to a method, whereby at least one transversal axis is associated with the solid piece, which transversal axis is perpendicular to the longitudinal axis, the method comprising the steps of:

- providing an elastic impact, preferably a mechanical impact, to the solid piece;
- obtaining a vibrational response of solid piece to the impact in the frequency domain;
- extracting a set of eigenfrequencies, and a set of attenuations, from the vibrational response, each of said eigenfrequencies corresponding to a vibrational mode of said solid piece, and each of said attenuations corresponding to an eigenfrequency of said set of eigenfrequencies, whereby the set of eigenfrequencies comprises at least one eigenfrequency corresponding to a longitudinal mode of the solid piece and at least one eigenfrequency corresponding to a transversal mode of the solid piece;
- providing a reference correlation prescription for said solid piece between:

  • the at least one eigenfrequency corresponding to a longitudinal mode,
  • the at least one eigenfrequency corresponding to a transversal mode, and
  • a damping parameter of the at least one eigenfrequency corresponding to a longitudinal mode

on the one hand, and a fracture strain value on the other hand, and

- deriving the fracture strain of the solid piece from said reference correlation prescription.

As such, the fracture strain of a solid piece can be essentially directly obtained from a vibrational response to an impact, without explicitly calculating a specific Poisson effect parameter, such as a Poisson ratio.

The present invention also concerns a system as claimed in independent claim 10, wherein the IE device comprises:

- an impactor for providing an impact to a solid piece, preferably a mechanical impactor;
- a sensor for obtaining a vibrational response of the solid piece to the impact;
- IE processing means configured to:

  • compute the vibrational response in the frequency domain;
  • extracting a set of eigenfrequencies, and a set of attenuations, from the vibrational response, each of said eigenfrequencies corresponding to a vibrational mode of said solid piece, and each of said attenuations corresponding to an eigenfrequency of said set of eigenfrequencies, whereby the set of eigenfrequencies comprises at least one eigenfrequency corresponding to a longitudinal mode of the solid piece and at least one eigenfrequency corresponding to a transversal mode of the solid piece;
  • computing at least one damping parameter from an attenuation corresponding to said at least one eigenfrequency corresponding to a longitudinal mode of the solid piece;
  • deriving the fracture strain of the solid piece from a reference correlation prescription.

Hereby, the IE processing means may be the processing means of the system as claimed in claim 10 or the IE processing means may be different from the processing means of the system as claimed in claim 10. In the latter case, the IE processing means are preferably configured to communicate with the processing means of the system.

Also hereby, the reference correlation prescription can be a reference correlation prescription for said solid piece between:

• the at least one eigenfrequency corresponding to a longitudinal mode,
• the at least one eigenfrequency corresponding to a transversal mode, and
• a damping parameter of the at least one eigenfrequency corresponding to a longitudinal mode

on the one hand, and a fracture strain value on the other hand.

Alternatively, the reference correlation prescription can be a reference correlation prescription for said solid piece between a Poisson effect parameter and a damping parameter on the one hand, and a fracture strain value on the other hand, and the processing means can be further configured for:

- obtaining the Poisson effect parameter on the basis of the obtained set of eigenfrequencies, and
- obtaining the damping parameter on the basis the obtained set of attenuations

IE systems for obtaining a vibrational response to an impact of an object are commercially available, and are disclosed in e.g. WO2019020825A1, WO2020254698, WO2022148827A1, WO2022189466A1, WO2023083944A1. Such prior art systems may be altered to derive the fracture strain, e.g. by reconfiguring the processing means in accordance with the present invention, and in particular to derive the fracture strain of the solid piece using a reference correlation prescription as described above and further in this document.

An important insight leading to the present invention is the discovery of a correlation between the fracture strain on the one hand and a combination, preferably the product, of a Poisson effect parameter and a longitudinal damping parameter for solid pieces, together with the realisation that both quantities can be measured non-destructively. One possible explanation of this correlation has been provided above. Note that the correlation between fracture strain on the one hand and a combination of parameters obtained using an IE technique by analysing the vibrational response, indicates that the vibrational response contains information regarding the global properties of solid piece, such as fracture strain, as opposed to local properties of the solid piece, such as those obtained using the indentation measuring method described above. It can thus be reasonably expected that more restrictions on the validity of the stress-strain parameters can be extracted using the vibrational response, such as the ductility at fracture. However, it should be clear that extracting the fracture strain already provides an important restriction as to the region of validity or the stress-strain parameters obtained during step (I), i.e. these stress-strain parameters are invalid above the fracture strain obtained from the vibrational response.

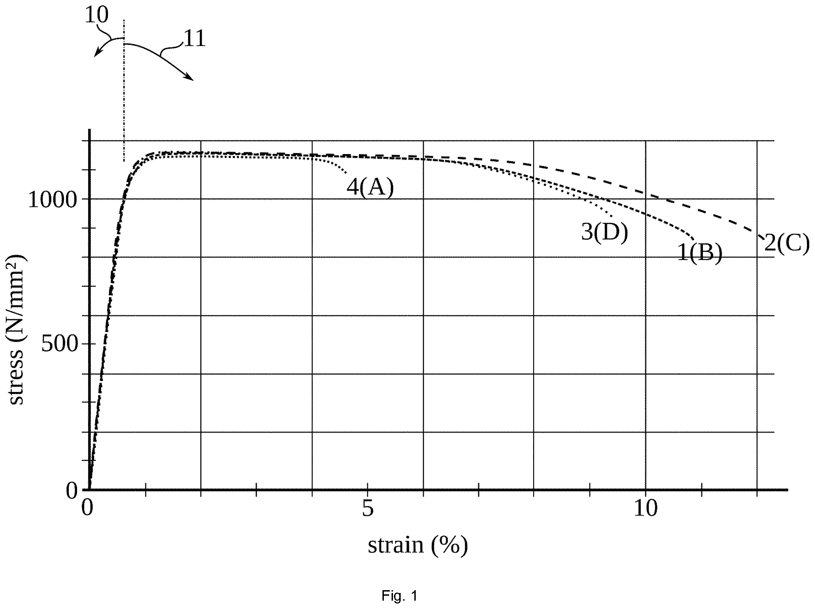

Evidence for the correlation between the Poisson effect parameter and the damping parameter on the one hand, and a fracture strain value on the other hand is provided in figs. 1-4. Fig. 1 shows the stress strain curves of four beam-shaped test solid pieces. The test solid pieces are 3D printed using the same process, yet it is seen from the stress-strain curves that they have different properties with respect to plastic deformation: the first part (10) of the curves, relating to elastic deformation, essentially coincide, indicating that the four test pieces have essentially the same Young modulus; the second part (11) of the curves, relating to plastic deformation, differ considerably amongst the four pieces. The results are summarized in the table below:

| No. | $d_0$ (mm) | $S_0$ (mm$^2$) | $L_0$ (mm) | Fmax (N) | A (%) |
|---|---|---|---|---|---|
| 1 | 8 | 50.27 | 40.06 | 58060 | 10.4 |
| 2 | 7.99 | 50.14 | 40.01 | 58279 | 11.7 |
| 3 | 8.01 | 50.39 | 40.11 | 58466 | 8.9 |
| 4 | 8 | 50.27 | 40.06 | 57601 | 4.0 |

The test pieces are cylindrically shaped with diameter $d_0$, area $S_0$ and length $L_0$. $F_{max}$ is the maximal tensile strength and A is the elongation at break in percent.

The test pieces were 3D printed using selective laser melting (SLM). It can be reasonably expected that the results do not qualitatively change if the objects are 3D printed using other techniques. Hence, in an embodiment, the solid pieces are 3D printed using powder bed fusion, preferably selective laser melting. Alternatively, or additionally, the solid pieces may be manufactured using any or any combination of the following techniques:

- Vat photopolymerization
- Material jetting
- Binder jetting
- Material extrusion
- Directed energy deposition
- Sheet lamination

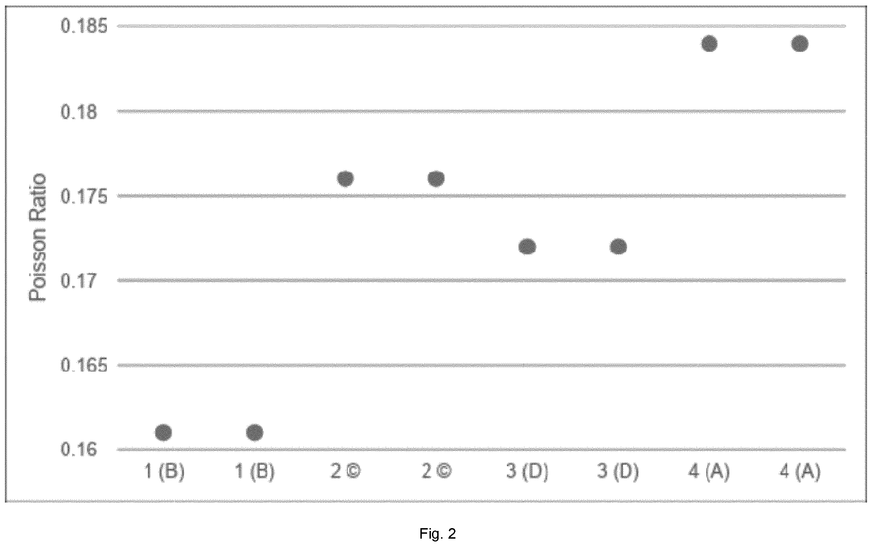

Fig. 2 shows the Poisson ratio's of the four test pieces. The two values per test piece are obtained using the GrindoSonic® MK7 apparatus. Hereby, two measurements are performed in order to check repeatability, which turns out to be very good for the Poisson ratio.

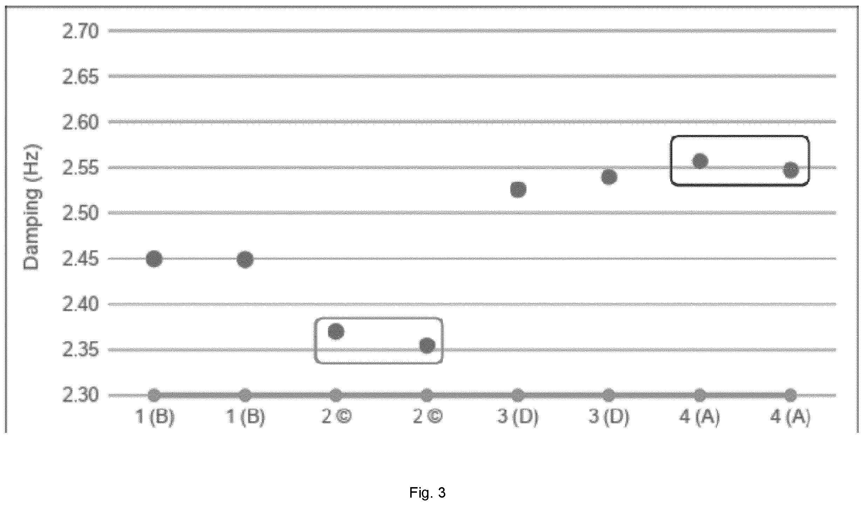

Fig. 3 shows the damping parameters of the four pieces. The two values per test piece are obtained using the GrindoSonic® MK7 apparatus. Hereby, two measurements are performed in order to check repeatability, which turns out to be good to within the 2% level.

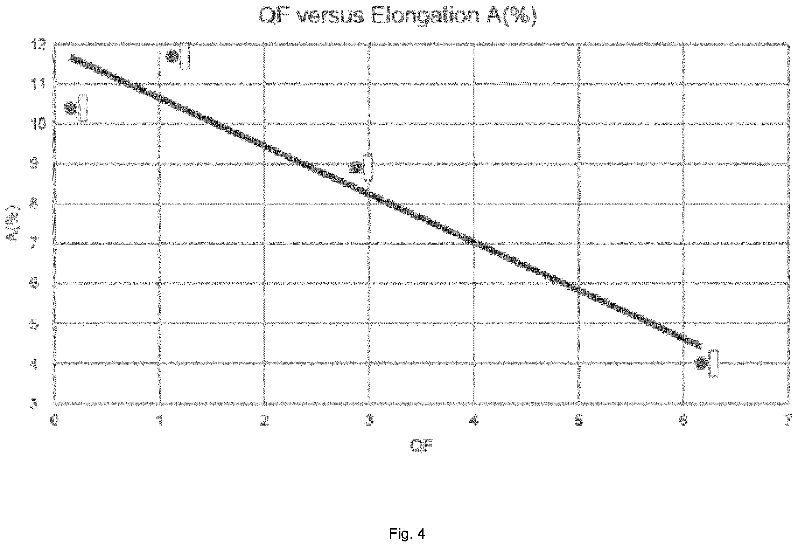

Fig. 4 shows an example of a reference correlation prescription for solid pieces having the shape and size of the test pieces, the correlation prescription being presented between the Poisson ratio's of fig. 2 and the damping parameters of fig. 3 on the one hand, and a fracture strain value on the other hand. "QF" refers to the product of the Poisson ratio and the damping parameter, multiplied by 1000 for ease of readability, and "A" refers to fracture strain in percent. As one can see, the correlation between fracture strain A and quality factor QF is linear with a correlation coefficient of 0.90, indicating that the method of the present invention allows obtaining the elongation at break to well within 15%. Note that further tests allow to construct a more precise correlation prescription if desired.

More in particular the fracture strain, also called the elongation at breakage, appears to be approximately proportionate to the product of the Poisson ratio and the damping parameter. In order to allow a certain degree of freedom to more accurately model the correlation, the elongation at breakage A can be derived from the following formula:

$$A = C.P_v^r.D^s \qquad \text{(form. 1)}$$

Herein, 'A' refers to the elongation at breakage, preferably expressed in percentage of the original length of the object, i.e. the length of the object when it is not put under stress, '$P_v$' is the Poisson ratio which is exponentiated by 'r', and 'D' is the damping parameter which is exponentiated by 's'. 'C' is a constant which typically depends on the dimensions and shape of the object.

Hence, preferably the reference correlation prescription has the form of formula 1:

$$A = C.P_v^r.D^s \qquad \text{(form. 1)}$$

wherein r is at least 0.7, such as 0.7, 0.8, 0.9 or any value therebetween or above, and/or r is at most 1.3, such as 1.3, 1.2, 1.1 or any value therebetween and below. Preferably r lies between 0.9 and 1.1, such as 0.9, 0.91, 0.92, 0.93, 0.94, 0.95, 0.96, 0.97, 0.98, 0.99, 1.00, 1.01, 1.02, 1.03, 1.04, 1.05, 1.06, 1.07, 1.08, 1.09, 1.10 or any value therebetween, most preferably r is about 1. Further, s is preferably at least 0.7, such as 0.7, 0.8, 0.9 or any value therebetween or above, and/or s is at most 1.3, such as 1.3, 1.2, 1.1 or any value therebetween and below. Preferably s lies between 0.9 and 1.1, such as 0.9, 0.91, 0.92, 0.93, 0.94, 0.95, 0.96, 0.97, 0.98, 0.99, 1.00, 1.01, 1.02, 1.03, 1.04, 1.05, 1.06, 1.07, 1.08, 1.09, 1.10 or any value therebetween, most preferably s is about 1.

An important advantage of the present invention is also that solid pieces can be tested and selected with respect to their fracture strain.

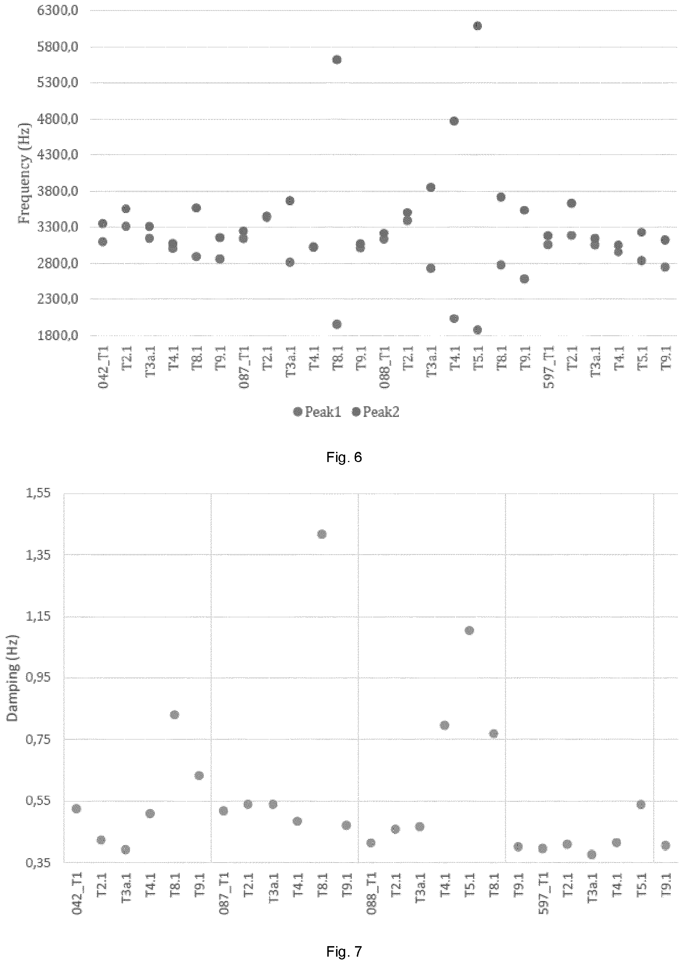

A further investigation into using the results of a vibrational response measurement to restrict the validity of indentation measurements are provided in figs. 6-10. Hereby, a batch of 25 metal solid pieces of similar, though slightly varying, shape and size were tested. The material of the solid pieces was DBL4918.20 aluminium alloy.

Fig. 6 shows the results for two flexural eigenfrequency values per solid piece. Note for each solid piece, the difference between the two eigenfrequency values typically reflects an asymmetry in the solid piece. Fig. 7 shows the results for the same batch of the measured damping, proportional to the width of the eigenfrequency peak in the vibrational response, wherein the average was taken of both flexural resonance peaks.

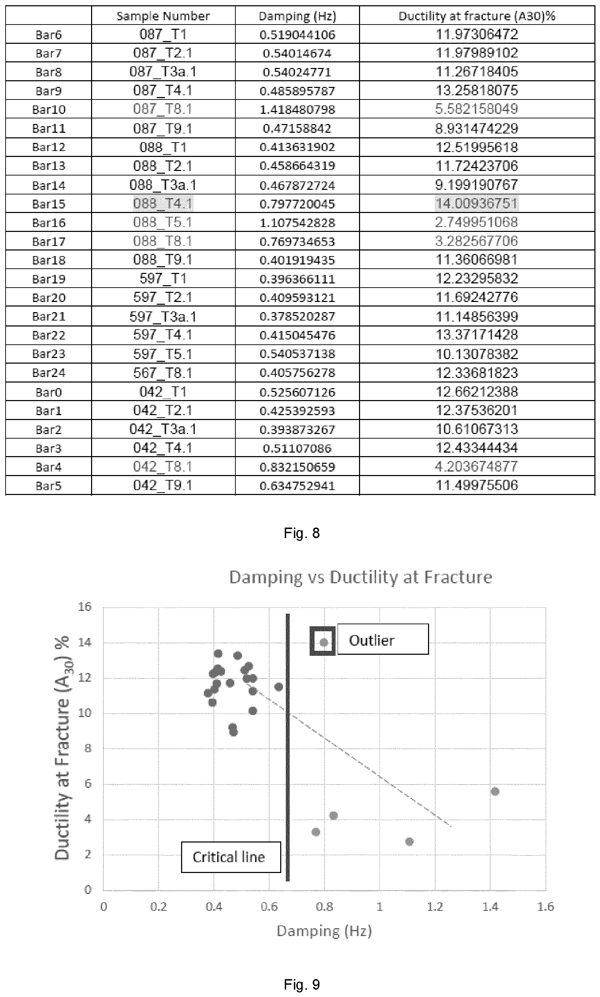

For the set of 25 solid pieces, a clear correlation between damping and ductility at fracture is presented in figs. 8 and 9. Hereby, the high-damping pieces show a low ductility as seen in fig. 9, where only 1 outlier is seen. Even with the outlier, one can see that the specificity in the correlation is very high: all solid pieces with a high ductility at fracture have a low damping. Note that the ductility at fracture was measured using a (destructive) standardized test after the solid pieces were measured using the method of the present invention. Also note that the correlation is already present without using a Poisson effect parameter. Hence, in a preferred embodiment of the invention, step (III) comprises the steps of:

  g) optionally obtaining from the vibrational response a Poisson effect parameter of the solid piece with respect to a longitudinal axis associated with the solid piece and a transversal axis associated with the solid piece, the transversal axis perpendicular to the longitudinal axis;

  h) obtaining a damping parameter for an eigenfrequency along the longitudinal axis from the vibrational response;

  i) providing a reference correlation prescription for said solid piece between the damping parameter, and optionally Poisson effect parameter, on the one hand, and a validity restriction, preferably a ductility at fracture value on the other hand, and

  j) deriving the validity restriction, preferably the ductility at fracture, of the solid piece from said reference correlation prescription, thereby restricting the validity of the at least one of the first set of stress-strain material parameters of the solid piece.

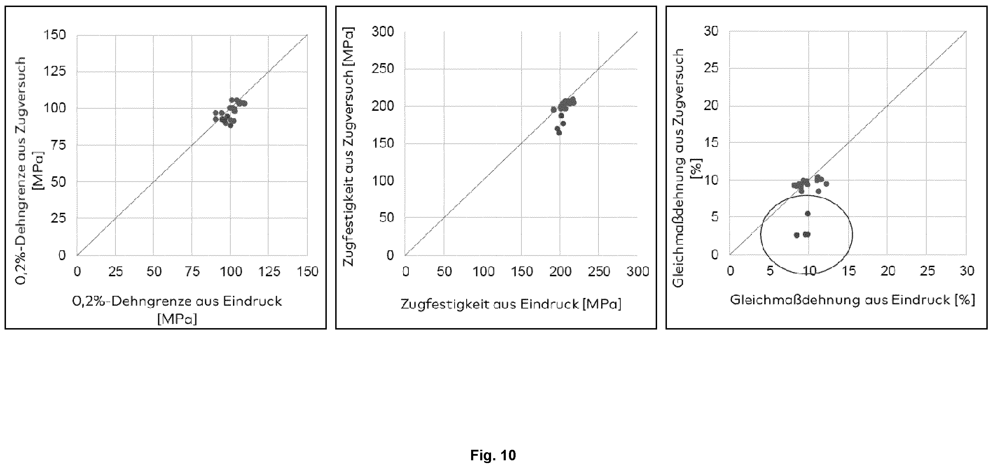

Fig. 10 illustrates the invention further. Hereby, the same batch of solid pieces are measured using an indentation technique using a i3D® WLI machine from Imprintec GmbH. Fig. 10 shows the 0.2% yield strength (left), the tensile strength (middle) and the uniform elongation (right) as obtained from the indentation technique (horizontal axis) compared to the values obtained using a standardized (destructive) tensile test. The left figure, comparing the 0.2% yield strength shows that the values for the yield strength correspond between the non-destructive indentation test and the destructive tensile test. However, for the tensile strength (middle figure) and the uniform elongation (right figure), it is clear that for 4 solid pieces, a clear deviation exists between the values obtained with the indentation technique as compared to the values obtained with the standardized tensile test. These four solid pieces were found to correspond to the four solid pieces which have a small damping (as identified in fig. 8 and fig. 9) as measured using the non-destructive IE technique. As such, in the present example, the validity of a set of stress-strain parameters, i.c. tensile strength and the uniform elongation, obtained by an indentation technique, is restricted by analyzing the vibrational response, i.c. by extracting a damping parameter, obtained using an impact excitation technique.

For ease of reference, the axes in fig. 10 are indicated in German, whereby "0,2%-Dehngrenze" refers to 0.2% yield strength, "Zugfestigkeit" refers to tensile strength, "Gleichmassdehnung" refers to uniform elongation, "aus Eindruck" refers to results obtained from the indentation technique, and "aus Zugversuch" refers to results obtained from the tensile test.

**Claims**

1. A method for obtaining stress-strain material parameters of a solid piece, comprising the steps of:

    (I) optically and/or tactilely obtaining a generated indentation topography of a local indent generated into the solid piece and extracting indent material parameter values of a first set of stress-strain material parameters of the solid piece from the generated indentation topography,
    (II) obtaining a vibrational response to an elastic impact on the solid piece, and
    (III) extracting a validity restriction to at least one of the first set of stress-strain material parameters of the solid piece from the vibrational response.

2. A method according to claim 1, whereby step (III) comprises obtaining a fracture strain value from the vibrational response, which fracture strain value restricts the validity of the first set of stress-strain parameters.

3. A method according to any of the claims 1 or 2 for obtaining stress-strain material parameters of a solid piece, wherein step (I) comprises the steps of:

    a) obtaining an initial topography of the solid piece at an indent location
    b) generating an indent into the solid piece at the indent location
    c) subsequently obtaining the generated indentation topography of the generated indent
    d) simulating a theoretical indentation topography using a material model of the solid piece, preferably said material model being an elastoplastic model and/or preferably an anisotropic material model, the material model comprising a set of material model parameters
    e) obtaining model parameter values for said model parameters by comparing the theoretical indentation topography to the generated indentation topography, optionally by fitting the model parameters to reduce a difference between the theoretical indentation topography and the generated indentation topography
    f) obtaining said indent material parameter values of the first set of stress-strain material parameters from the obtained material model parameter values.

4. A method according to any of the claims 1 to 3, wherein step (III) comprises the steps of:

    g) obtaining from the vibrational response a Poisson effect parameter of the solid piece with respect to a longitudinal axis associated with the solid piece and a transversal axis associated with the solid piece, the transversal axis perpendicular to the longitudinal axis;
    h) obtaining a damping parameter for an eigenfrequency along said longitudinal axis from the vibrational response;
    i) providing a reference correlation prescription for said solid piece between the Poisson effect parameter and the damping parameter on the one hand, and a fracture strain value on the other hand, and
    j) deriving the fracture strain of the solid piece from said reference correlation prescription, the fracture strain restricting the validity of the at least one of the first set of stress-strain material parameters of the solid piece.

5. A method according to claim 4, comprising the further steps of:

    - providing an elastic impact, preferably a mechanical impact, to the solid piece;
    - obtaining said vibrational response of the solid piece to the elastic impact in the frequency domain;
    - extracting a set of eigenfrequencies, and a set of attenuations, from the vibrational response, each of said eigenfrequencies corresponding to a vibrational mode of said solid piece, and each of said attenuations corresponding to an eigenfrequency of said set of eigenfrequencies, whereby the set of eigenfrequencies comprises at least one eigenfrequency corresponding to a longitudinal mode of the solid piece and at least one eigenfrequency corresponding to a transversal mode of the solid;
- obtaining the Poisson effect parameter on the basis of the obtained set of eigenfrequencies, and
- obtaining the damping parameter on the basis the obtained set of attenuations.

6. A method according to any one of the previous claims 4 or 5, whereby the Poisson effect parameter is the Poisson ratio.

7. A method according to claim 6, whereby the reference correlation prescription has the form of formula 1

$$A = C . P_v^r . D^s \qquad \text{(form. 1)}$$

wherein 'A' refers to the elongation at breakage, preferably expressed in percentage of the original length of the object, '$P_v$' is the Poisson ratio which is exponentiated by 'r', 'D' is the damping parameter which is exponentiated by 's', and 'C' is a constant which preferably depends on the dimensions and shape of the solid piece, wherein r is at least 0.7 and r is at most 1.3, and wherein s is preferably at least 0.7 and at most 1.3.

8. A method according to claim 7, wherein r lies between 0.9 and 1.1, and wherein s lies between 0.9 and 1.1.

9. A **method** according to any of the previous claims, wherein the solid piece is a 3D printed object, preferably wherein the 3D printed object is 3D printed using powder bed fusion, preferably selective laser melting.

10. A system for obtaining stress-strain material parameters of a solid piece, comprising:

- an indentation measuring device for determining indent material parameter values of a first set of at least one stress-strain material parameter of the solid piece from a generated indentation topography, comprising:

  ◦ at least one image acquisition unit for optically determining a solid piece geometry of the solid piece;
  ◦ at least one mechanical test probe for producing an impression in the solid piece,

- an impact excitation (IE) device for non-destructively obtaining a fracture strain of a solid piece, comprising:

  ◦ an impactor for providing an impact to a solid piece, preferably a mechanical impactor;
  ◦ a sensor for obtaining a vibrational response of the solid piece to the impact;

- processing means configured for extracting a validity restriction to the first set of at least one stress-strain material parameters of the solid piece from the vibrational response.

11. A system according to claim 10, whereby at least the image acquisition unit and the mechanical test probe together form a structural unit.

12. A system according to any of the claims 10 to 11, whereby the processing means is configured to:

• compute the vibrational response obtained by the sensor of the IE device, in the frequency domain;
• extracting a set of eigenfrequencies, and a set of attenuations, from the vibrational response, each of said eigenfrequencies corresponding to a vibrational mode of said solid piece, and each of said attenuations corresponding to an eigenfrequency of said set of eigenfrequencies, whereby the set of eigenfrequencies comprises at least one eigenfrequency corresponding to a longitudinal mode of the solid piece and at least one eigenfrequency corresponding to a transversal mode of the solid piece;
• computing at least one damping parameter from an attenuation corresponding to said at least one eigenfrequency corresponding to a longitudinal mode of the solid piece;
• deriving the fracture strain of the solid piece from a reference correlation prescription.

13. A system according to claim 12, wherein the processing means is integrated in the IE device.

14. A system according to any of the claims 12 or 13, whereby the reference correlation prescription is a reference correlation prescription for said solid piece between:

- • the at least one eigenfrequency corresponding to a longitudinal mode,
- • the at least one eigenfrequency corresponding to a transversal mode, and
- • a damping parameter of the at least one eigenfrequency corresponding to a longitudinal mode

on the one hand, and a fracture strain value on the other hand.

15. A system according to any of the claims 12 or 13, whereby the reference correlation prescription is a reference correlation prescription for said solid piece between a Poisson effect parameter and a damping parameter on the one hand, and a fracture strain value on the other hand, and whereby the processing means is further configured for:

- obtaining the Poisson effect parameter on the basis of the obtained set of eigenfrequencies, and
- obtaining the damping parameter on the basis the obtained set of attenuations.

Fig. 1

Fig. 2

Fig. 3

Fig. 4

Fig. 5

Fig. 6

Fig. 7

| | Sample Number | Damping (Hz) | Ductility at fracture (A30)% |
|---|---|---|---|
| Bar6 | 087_T1 | 0.519044106 | 11.97306472 |
| Bar7 | 087_T2.1 | 0.54014674 | 11.97989102 |
| Bar8 | 087_T3a.1 | 0.54024771 | 11.26718405 |
| Bar9 | 087_T4.1 | 0.485895787 | 13.25818075 |
| Bar10 | 087_T8.1 | 1.418480798 | 5.582158049 |
| Bar11 | 087_T9.1 | 0.47158842 | 8.931474229 |
| Bar12 | 088_T1 | 0.413631902 | 12.51995618 |
| Bar13 | 088_T2.1 | 0.458664319 | 11.72423706 |
| Bar14 | 088_T3a.1 | 0.467872724 | 9.199190767 |
| Bar15 | 088_T4.1 | 0.797720045 | 14.00936751 |
| Bar16 | 088_T5.1 | 1.107542828 | 2.749951068 |
| Bar17 | 088_T8.1 | 0.769734653 | 3.282567706 |
| Bar18 | 088_T9.1 | 0.401919435 | 11.36066981 |
| Bar19 | 597_T1 | 0.396366111 | 12.23295832 |
| Bar20 | 597_T2.1 | 0.409593121 | 11.69242776 |
| Bar21 | 597_T3a.1 | 0.378520287 | 11.14856399 |
| Bar22 | 597_T4.1 | 0.415045476 | 13.37171428 |
| Bar23 | 597_T5.1 | 0.540537138 | 10.13078382 |
| Bar24 | 567_T8.1 | 0.405756278 | 12.33681823 |
| Bar0 | 042_T1 | 0.525607126 | 12.66212388 |
| Bar1 | 042_T2.1 | 0.425392593 | 12.37536201 |
| Bar2 | 042_T3a.1 | 0.393873267 | 10.61067313 |
| Bar3 | 042_T4.1 | 0.51107086 | 12.43344434 |
| Bar4 | 042_T8.1 | 0.832150659 | 4.203674877 |
| Bar5 | 042_T9.1 | 0.634752941 | 11.49975506 |

Fig. 8

Fig. 9

Fig. 10

## EUROPEAN SEARCH REPORT

**Application Number**

EP 25 15 5899

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2020/249138 A1 (SCHMALING BENJAMIN [DE] ET AL) 6 August 2020 (2020-08-06) * paragraph [0049] * ----- | 1-15 | INV. G01N3/40 G01N3/30 G01N3/42 B33Y50/00 G01M7/08 G01N29/04 G01N29/42 ADD. G01N3/28 |

**TECHNICAL FIELDS SEARCHED (IPC)**

G01N
G01H
G01M
B33Y

The present search report has been drawn up for all claims

| Place of search | Date of completion of the search | Examiner |
|---|---|---|
| The Hague | 8 July 2025 | Kramer, Joanne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 5899

This annex lists the patent family members relating to the patent documents cited in the above-mentioned European search report.
The members are as contained in the European Patent Office EDP file on
The European Patent Office is in no way liable for these particulars which are merely given for the purpose of information.

08-07-2025

| Patent document cited in search report | Publication date | Patent family member(s) | | Publication date |
|---|---|---|---|---|
| US 2020249138 A1 | 06-08-2020 | CN | 111226106 A | 02-06-2020 |
| | | EP | 3698121 A1 | 26-08-2020 |
| | | US | 2020249138 A1 | 06-08-2020 |
| | | WO | 2019076923 A1 | 25-04-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019076923 A1
- DE 102011115519 A1
- WO 2019020825 A1
- WO 2020254698 A1
- WO 2022148827 A1
- WO 2022189466 A1
- WO 2023072925 A1
- WO 2023083944 A1
- WO 2023152399 A1
- WO 2024008679 A1
- WO 2020254698 A